**Europäisches Patentamt**

**European Patent Office**

**Office européen des brevets**

(11) Veröffentlichungsnummer : **0 391 346 B1**

(12) **EUROPÄISCHE PATENTSCHRIFT**

(45) Veröffentlichungstag der Patentschrift :
**29.09.93 Patentblatt 93/39**

(21) Anmeldenummer : **90106360.2**

(22) Anmeldetag : **03.04.90**

(51) Int. Cl.⁵ : **B23Q 3/06**

(30) Priorität : **04.04.89 DE 8904096 U**
**11.09.89 DE 8910814 U**

(43) Veröffentlichungstag der Anmeldung :
**10.10.90 Patentblatt 90/41**

(45) Bekanntmachung des Hinweises auf die
Patenterteilung :
**29.09.93 Patentblatt 93/39**

(84) Benannte Vertragsstaaten :
**AT CH DE ES FR GB IT LI NL SE**

(56) Entgegenhaltungen :
**CH-A- 463 244**
**CH-A- 597 976**
**DE-A- 2 808 667**
**DE-A- 3 003 626**

(73) Patentinhaber : **Lenzkes, Karl-Heinz**
**Rosmart 62**
**D-58762 Altena (DE)**

(72) Erfinder : **Lenzkes, Karl-Heinz**
**Rosmart 62**
**D-58762 Altena (DE)**

(74) Vertreter : **Rehberg, Elmar, Dipl.-Ing.**
**Am Kirschberge 22 Postfach 3162**
**D-37021 Göttingen (DE)**

(54) **Spannvorrichtung zum Festspannen eines Werkstücks auf einem Spanntisch.**

## Beschreibung

Die Erfindung bezieht sich auf eine Spannvorrichtung zum Festspannen eines Werkstücks auf einem Spanntisch mit den im Oberbegriff des Anspruchs 1 angegebenen Merkmalen. Solche Spannvorrichtungen werden insbesondere bei der spanenden Bearbeitung von Werkstücken, aber auch in vielen anderen Bereichen, eingesetzt, beispielsweise, wenn eine Spritzform auf einem Spanntisch festgespannt wird. Der Begriff Werkstück ist hier sehr exzensiv zu verstehen. Es kann sich ganz allgemein um Spanngut, insbesondere auch um Werkzeuge oder sonstige Teile handeln, die wiederum während eines Bearbeitungsvorgangs benutzt werden.

Eine Spannvorrichtung der eingangs beschriebenen Art ist aus der FR-A-26 12 439 bekannt. Dabei ist bereits eine Spannklaue einem Führungsschuh zugeordnet. Der Führungsschuh weist zwei langlochartige Durchbrechungen auf und wird mit Hilfe von zwei Befestigungsschrauben in Gewindelöchern, die im Spanntisch vorgesehen sind, festgespannt, wobei die langlochartigen Durchbrechungen eine stufenlose Verschiebung des Führungsschuhs in einer einzigen horizontalen Richtung ermöglichen. Damit ist auch die Wirkrichtung der Spannklaue in der horizontalen Richtung festgelegt. Die Spannklaue ist plattenförmig ausgebildet und besitzt etwa in ihrem Mittelbereich zwei seitlich auskragende Fortsätze, wobei die plattenförmige Spannklaue damit als Kipphebel ausgebildet ist und einen sich nach hinten erstreckenden Spannschenkel und einen sich von den Fortsätzen nach vorn erstreckenden Klemmschenkel aufweist, mit dem letztendlich das Werkstück festgespannt wird. Die seitlich auskragenden Fortsätze weisen zylindrischen Querschnitt auf und greifen ihrerseits in Ausnehmungen des Führungsschuhs ein. Diese Ausnehmungen sind mit Ausnahme einer durch einen Gewindestift o. dgl. verschließbaren Einführschacht randgeschlossen ausgebildet und gestatten es, den Führungsschuh um eine gewisse begrenzte Strecke in der vorher beschriebenen einzigen Richtung gegenüber dem befestigten Führungsschuh zu verschieben, bevor das Werkstück festgespannt wird. Die Verstellbarkeit in dieser Richtung ist nur vergleichsweise klein. Die Ausnehmungen besitzen eine nutzbare Länge, die innerhalb der Grenzen der langlochartigen Durchbrechungen angeordnet ist und die kleiner ist als die Länge der langlochartigen Durchbrechungen. Das freie Ende des Klemmschenkels wird von einer Spannschraube durchsetzt, die sich in einem entsprechenden Gewinde im Klemmschenkel führt und beim Festspannen des Werkstücks auf das hintere Ende des Führungsschuhs drückt. Der Spannbereich dieser bekannten Spannvorrichtung ist in der Höhe auf wenige überbrückbare Millimeter beschränkt, weil die Spannklaue plattenförmig ausgebildet ist und im wesentlichen nur sehr begrenzt schwenkbar um die zapfenartigen Fortsätze gelagert ist. Weiterhin ist nachteilig, daß durch die Befestigung des Führungsschuhs auf dem Spanntisch nur eine einzige Richtung in der horizontalen Ebene vorgegeben ist, in welcher die Spannvorrichtung stufenlos verstellbar ist. Der Verschiebeweg ist dabei sehr klein und es ist erforderlich, ein vergleichsweise enges Raster von Gewindelöchern im Spanntisch vorzusehen, um mit ein und derselben Spannvorrichtung verschieden breit ausladende Werkstücke an den verschiedenen Stellen dieser einzigen Richtung spannen zu können. Dabei ist auch nachteilig, daß infolge des engen Rasters der Führungsschuh am Spanntisch oft versetzt werden muß, wenn dies unterschiedliche Werkstückgrößen erfordern. Ein Spannen in einer anderen horizontalen Richtung, als durch die beiden Befestigungsschrauben vorgegeben, ist nicht möglich. Der Führungsschuh kann nicht um eine vertikale Achse gedreht werden. Es ergeben sich weiterhin auch ungünstige Kraftübertragungsverhältnisse, wenn beispielsweise die Befestigungsschrauben relativ weit hinten an den langlochartigen Durchbrechungen eingesetzt werden und die Fortsätze und damit die Spannklaue relativ weit nach vorn in den Ausnehmungen verschoben zum Einsatz gelangt. Weiterhin ist nachteilig, daß die Spannschraube mit dem freien Ende ihres Gewindeschafts nur bei einer einzigen, feststehenden Werkstückhöhe flächig auf dem Führungsschuh aufliegt. Bei jeder abweichenden Höhe des Werkstücks stützt sich die Spannschraube nur noch punktförmig an dem Führungsschuh ab, wobei unzulässig große Flächenpressungen entstehen. Mit dieser bekannten Spannvorrichtung ist es nicht möglich, Werkstücke unterschiedlicher Höhe in einem größeren Bereich zu spannen, weil der Kippwinkel der plattenförmigen Spannklaue auf wenige Grad begrenzt ist.

Die US-A-4 470 586 zeigt eine Spannvorrichtung, bei der ein Führungsschuh fehlt. Stattdessen arbeitet die Spannklaue, die auch hier über zwei seitlich auskragende Fortsätze verfügt, direkt mit der Nut eines Nutenspanntischs zusammen. Die Spannklaue weist zu diesem Zweck eine gebogene Form auf, wobei sich der Klemmschenkel und der Spannschenkel etwa in gerader Linie zueinander erstrecken und die Fortsätze weit unterhalb dieser geraden Linie angeordnet sind, weil sie in die Nut des Spanntischs eingreifen müssen. Am hinteren Ende der Spannklaue, also am freien Ende des Spannschenkels, ist auch hier eine Spannschraube vorgesehen, die sich am Grund der Nut im Nutentisch abstützt. Die an der Spannklaue vorgesehenen und seitlich auskragenden Fortsätze weisen geringfügig ovale Form auf, wodurch die Spannhöhe begrenzt wird. Die Spannhöhe endet dort, wenn sich die ovalen Fortsätze an zwei gegenüberliegenden Flächen der Nut des Nutentischs anlegen; höhere Werkstücke können mit dieser Spannvorrichtung nicht mehr gespannt werden. Damit ist es möglich, Werkstücke in einem Höhenbereich, der über einige Zentimeter gehen kann, wahlweise zu spannen. In der Horizontalebene ist jedoch die Spannvorrichtung an die Richtung gebunden, die durch die Richtung der Nuten im Nutenspanntisch vorgegeben wird. In beispielsweise 90° dazu gedrehter oder auch in jeder schrägen Winkellage kann die Spannvorrichtung nicht eingesetzt werden. Das freie Ende der Spannschraube ist hier zwar ballig ausgebildet; jedoch ergibt sich auch hier der Nachteil der punktförmigen Kraftübertragung. Voraussetzung für die Anwendbarkeit dieser Spannvorrichtung ist ein mit Nuten versehener Spanntisch. Bei Bearbeitungszentren kommt es oft vor, daß die dort vorgesehenen Spanntische nur mit Gewindelöchern versehen sind, die in einem bestimmten Raster angeordnet sind. In Verbindung damit kann die bekannte Spannklaue nicht eingesetzt werden.

Der Erfindung liegt die Aufgabe zugrunde, eine Spannvorrichtung der eingangs beschriebenen Art bereitzustellen, mit der es möglich ist, jeden Punkt eines Werkstücks in einem sich um die Spannvorrichtung herum ergebenden Raum auf einem Spanntisch spannen zu können. Dies soll stufenlos möglich sein. In vertikaler Richtung soll ein entsprechend großer Höhenbereich unterschiedlich hoher Werkstücke spannbar sein. In der Horizontalebene soll die Spannvorrichtung in jeder gewünschten horizontalen Richtung verschiebbar und einsetzbar sein, und zwar auch dann, wenn durch Nuten eines Nutentischs oder ein vorgegebenes Raster von Gewindelöchern im Spanntisch eine Horizontalrichtung bevorzugt festgelegt ist.

Erfindungsgemäß wird dies dadurch erreicht, daß die Ausnehmungen über die Länge des Führungsschuhs durchgehend vorgesehen sind und Bestandteile einer T-nutenförmigen Querschnittsgestaltung des Führungsschuhs sind, daß die Spannklaue eine geschwungene Gestalt aufweist, bei der die freien Enden des Klemmschenkels und des Spannschenkels höher angeordnet sind als die Fortsätze, daß die Fortsätze einen etwa elliptischen Querschnitt mit Ausrichtung der großen Achse etwa in Längsrichtung der Spannklaue aufweisen, daß die Spannklaue eine entgegen der Spannrichtung wirkende und sich am Führungsschuh abstützende Rückführfeder aufweist, und daß für die Befestigung des Führungsschuhs am Spanntisch nur eine Befestigungsschraube vorgesehen ist, der eine oder mehrere im vorderen Bereich des Führungsschuhs angeordnete Durchbrechungen zugeordnet sind. Die relative Verschiebbarkeit zwischen der Spannklaue und dem Führungsschuh wird durch die über die Länge des Führungsschuhs im wesentlichen durchgehenden Ausnehmungen erheblich vergrößert, so daß in den horizontalen Richtungen in einem größeren Umriß gespannt werden kann. Anders ausgedrückt kann z. B. das Rastermaß von Gewindelöchern im Spanntisch vergleichsweise mit großem Abstand gewählt werden; trotzdem ist dann jeder Punkt spannbar. Die T-nutenförmige Querschnittsgestaltung wird vorzugsweise am Führungsschuh verwirklicht, während die Spannklaue mit den auskragenden Fortsätzen ausgestattet ist; selbstverständlich ist auch eine umgekehrte Anordnung möglich. Durch die geschwungene Gestalt der Spannklaue wird der Spannbereich in der Höhe erweitert, d. h. es können unterschiedlich hohe Werkstücke in einem gewissen Spannbereich mit ein und derselben Spannklaue wahlweise festgespannt werden. Die geschwungene Gestalt ermöglicht - im Gegensatz zu einer plattenförmigen Gestalt der Spannklaue - auch das Überstreichen eines wesentlich größeren Verschwenkwinkels der Spannklaue um die Fortsätze. Die elliptische Ausbildung der Fortsätze ist von Vorteil für die Gestaltung der einwirkenden Hebellängen beim Spannen unterschiedlich hoher Werkstücke. Durch die elliptische Gestaltung der Fortsätze verlagert sich der Abstützpunkt der Fortsätze in dem Sinne, daß sich das Verhältnis der Hebellängen von Spannschenkel zu Klemmschenkel möglichst wenig ändert. Zwar verändern sich die absoluten Längen, jedoch bleibt das Verhältnis der Längen weitgehend konstant oder ähnlich, so daß bei unterschiedlich hohen Werkstücken etwa konstante Spannkräfte aufgebracht werden können. Die Vergrößerung des Spannbereichs und die Erreichbarkeit jedes Punkts im Raum um die Spannvorrichtung herum ergeben eine universelle, vielseitige Anwendbarkeit, und zwar unabhängig davon, ob der Spanntisch mit Spannuten oder mit einem Raster von Gewindelöchern versehen ist. Es kann auch quer oder in jeder beliebigen Schräglage zu den Nuten oder Gewindelöchern eines Spanntischs gespannt werden. Die Rückführfeder für die Spannklaue hat mehrere Funktionen. Sie sorgt einmal dafür, daß nach dem Lösen der Spannschraube und der Wegnahme eines Werkstücks die Spannklaue in einer Position verbleibt, in welcher das weitere, zu bearbeitende Werkstück unter den Klemmschenkel geschoben werden kann, ohne daß dieser gesondert angehoben werden muß. Weiterhin sorgt die Rückführfeder dafür, daß das Ende der Spannschraube gleichsam immer in Anlage an dem Führungsschuh gehalten wird. Gleichzeitig befinden sich auch die Fortsätze der Spannklaue in Abstützung nach oben an der T-nutenförmigen Querschnittsgestaltung des Führungsschuhs in Anlage. Insoweit werden die Spannwege klein, die beim Lösen und Festspannen durch Verdrehen der Spannschraube zu überwinden sind. Die Spannvorrichtung läßt sich insoweit schnell handhaben. Die Rückführfeder hat jedoch noch einen weiteren Vorteil: wenn die Spannvorrichtung an einem beispielsweise vertikal ausgerichteten Spanntisch Verwendung findet, wird zweckmäßig durch die Wahl der Vorspannung der Rückführfeder über die Anlagepunkte bzw. -flächen des Endes der Spannschraube und der Fortsätze am Führungsschuh sichergestellt, daß die Reibung ausreicht, die Relativlage zwischen Spannklaue und Führungsschuh zu sichern. Das Eigengewicht der Spannklaue führt also nicht dazu, daß sich die Spannklaue in einem vertikal ausgerichteten Führungsschuh von selbst verschiebt. Dies ist besonders sinnvoll, wenn Werkstücke einer Serie, also mit weitgehend übereinstimmenden Abmessungen, bearbeitet bzw. gespannt werden. Dadurch, daß am Führungsschuh nur eine einzige Befestigungsschraube vorgesehen ist, bildet diese Befestigungsschraube eine vertikale Achse, um welche der Führungsschuh und damit auch die Spannklaue verdrehbar sind, bevor die Befestigungsschraube festgezogen wird. Insoweit kann die Spannvorrichtung in jeder beliebigen Horizontalrichtung ausgerichtet zum Einsatz gelangen. Eine Abhängigkeit von der durch die Nuten eines Spanntischs oder die Feldanordnung von Gewindelöchern vorgegebenen Horizontalrichtung ist nicht mehr vorhanden. Durch die Anordnung von einer oder mehreren Durchbrechungen im vorderen Bereich des Führungsschuhs ist einerseits eine gute kraftmäßige Abstützung gegeben; andererseits kann durch diese Ausbildung gleichsam die nutzbare Fläche eines Spanntischs vergrößert werden, weil die Spannvorrichtung auch so eingesetzt werden kann, daß das hintere Ende des Führungsschuhs über den Rand des Spanntischs auskragt. Auch in einer solchen Position kann noch gespannt werden.

Die Spannschraube kann einen in einem Gewinde im Spannschenkel geführten Gewindebolzen aufweisen, an dessen dem Führungsschuh zugekehrten Ende eine Abstützkugel angeordnet ist, die an einem radial über den Umriß der Kugel ausragenden Fortsatz eine ebene Abstützfläche aufweist. Durch diese ebene Abstützfläche ist die Gewähr dafür gegeben, daß sich unabhängig von der Winkellage der Spannklaue die Spannkräfte, die von der Spannschraube aufgebracht werden, nicht mehr punktförmig, sondern flächenmäßig abstützen. Auch das vorteilhafte Zusammenwirken mit der Rückführfeder wird hier sichtbar. Die Abstützkugel mit ihrer Abstützfläche wird gleichsam automatisch in jeder Winkellage flächig ausgerichtet, d. h. bezüglich des Gewindebolzens verdreht. Durch die Anordnung der Abstützfläche an einem radial über den Umriß der Kugel auskragenden Fortsatz - anstelle der Verwendung einer abgeplatteten Kugel - ist die Gewähr dafür gegeben, daß die Abstützfläche niemals in den Umriß des Gewindebolzens einwandern kann. Weiterhin kann die Abstützfläche vorteilhaft größer als der Durchmesser der Kugel gewählt werden.

Die T-nutenförmige Querschnittsgestaltung der Ausnehmungen kann am vorderen Ende des Führungsschuhs in zwei Verengungen übergehen. Diese zwei Verengungen sind vorteilhaft dadurch herstellbar, daß beim Fräsen der T-Nut im Führungsschuh der Fräser nicht einfach geradlinig durch den Führungsschuh hindurchgeführt wird, sondern vor Erreichen des Endpunkts seine Bewegungsbahn umkehrt, so daß bogenförmig begrenzte Verengungen stehenbleiben. Diese Verengungen bilden dann einen Anschlag, der das Herausziehen der Spannklaue nach vorn verhindert. Der durch die Spannkräfte bei weit vorgeschobener Spannklaue am meisten belastete Querschnitt des Führungsschuhs wird damit gestärkt. An sich wäre es auch möglich, die Wandung des Führungsschuhs in diesem Bereich anzubohren und einen Spannstift oder eine Gewindeschraube einzuführen, die ihrerseits einen Anschlag bildet, der den Verschiebeweg der Spannklaue im Führungsschuh nach vorn begrenzt. Mit einer solchen Ausbildung wäre allerdings eine Schwächung des betreffenden Querschnitts des Führungsschuhs verbunden.

Es können Spannklauen mit unterschiedlich stark geschwungener Gestalt vorgesehen sein, die einem einzigen Führungsschuh zugeordnet sind, um unterschiedliche Höhenbereiche abzudecken. Es versteht sich, daß die geschwungene Gestaltung unterschiedlich ausgebildet ist. Für niedrige Werkstücke ist die Spannklaue mehr schwach geschwungen, während für hohe Werkstücke eine schwanenhalsähnliche Gestaltung erforderlich ist. So können beispielsweise einem Führungsschuh drei verschieden geschwungene Spannklauen wahlweise zugeordnet werden, wobei mit der ersten Spannklaue ein Höhenspannbereich von 6 bis 44 mm, mit einer mittleren Spannklaue ein Höhenbereich von 40 bis 72 mm und mit einer dritten Spannklaue ein Höhenbereich von 30 bis 90 mm überbrückbar ist. Es versteht sich, daß die betreffenden Spannklauen in der Gestaltung und Anordnung der seitlich auskragenden Fortsätze weitgehend ähnlich bzw. übereinstimmend ausgebildet sind.

Am hinteren Ende der T-nutenförmigen Ausnehmung des Führungsschuhs kann eine Schraube oder ein Stift vorgesehen sein, die niedrig über dem Boden der Ausnehmung angeordnet sind. Die Anordnung und Ausbildung der Schraube oder des Stifts ist auf die Querschnittsgestaltung der T-nutenförmigen Ausnehmung und auf die kleine Halbachse der elliptischen Querschnittsgestaltung der auskragenden Fortsätze der Spannklaue derart abgestimmt, daß die Spannklaue zum Wechsel ohne Lösen der Schraube oder des Stifts gezielt vom Führungsschuh abgenommen bzw. wieder auf diesen aufgesteckt werden kann, wenn die Rückführfeder etwas zusammengedrückt wird. Gegenüber der normalen Verschiebbarkeit der Spannklaue im Führungsschuh wirkt jedoch der Stift bzw. die Schraube als Anschlag am hinteren Ende des Führungsschuhs, so daß die Spannklaue nicht versehentlich aus dem Führungsschuh herausfallen kann.

Die Rückführfeder kann vorteilhaft in Form einer Blattfeder vorgesehen und unter dem Spannschenkel an die Spannklaue angeschraubt sein, wobei sich die Blattfeder im Bereich des Klemmschenkels nach vorn frei auskragend erstreckt. Damit legt sich das freie Ende der Blattfeder an den Boden der T-nutenförmigen Ausnehmung an und das von der Rückführfeder um den Anlagepunkt der Fortsätze am Führungsschuh ausgeübte Drehmoment wirkt in der richtigen Richtung.

Die Blattfeder kann zweckmäßig T-förmigen Umriß aufweisen, wobei die größte Breite größer ist als der Durchmesser des Kopfs der Befestigungsschraube, so daß die Blattfeder die Verschiebbarkeit der Spannklaue im Führungsschuh nicht behindert. Die Blattfeder erstreckt sich mit ihrem weniger breiten Schenkel durch eine Vertiefung zwischen den auskragenden Fortsätzen hindurch, so daß hier die freie Beweglichkeit gegeben ist.

Im vorderen Bereich des Führungsschuhs können zweckmäßig mehrere Durchbrechungen angeordnet sein, die durch einen Schlitz verringerter Breite untereinander verbunden sind. Damit wird bewußt eine langlochartige Gestaltung vermieden und es sind lediglich zwei oder drei Fixpunkte vorgegeben, an denen die Befestigungsschraube zum Wirkeinsatz kommt. Dies ist für eine sinnvolle Abstützung der Spannkräfte am Spanntisch wesentlich. Andererseits wird es aber damit möglich, daß die Befestigungsschraube aus einem Nutenstein nicht vollständig herausgedreht werden muß, wenn die relative Lage der Befestigungsschraube zum Führungsschuh geändert werden muß. Ein erneutes Einfädeln der Befestigungsschraube in ein Gewindedurchgangsloch im Nutenstein oder gar die Herausnahme des Nutensteins aus der Nut und das komplette seitliche Neueinführen des Führungsschuhs mit dem Nutenstein entfallen. Der Schlitz verringerter Breite, der die Durchbrechungen verbindet, ergibt eine stufenweise Verschiebbarkeit des Führungsschuhs und in Verbindung mit der jeweils gegebenen stufenlosen Verschiebbarkeit der Spannklaue im Führungsschuh einen relativ großen Bereich, in welchem die Spannvorrichtung bei konstanter Hochachse der Befestigungsschraube eingesetzt werden kann.

Der Fortsatz der Abstützkugel der Spannschraube kann mit sich in radialer Richtung im Durchmesser vergrößernden Querschnitt vorgesehen sein, so daß die Abstützfläche entsprechend großflächig gestaltet werden kann.

Zwischen den Fortsätzen der Spannklaue kann eine Vertiefung vorgesehen sein, durch die sich die Rückführfeder hindurch erstreckt, so daß die Rückführfeder in diesem Bereich frei beweglich ist und sich sicher mit dem vorderen Ende ihrer T-förmigen Gestalt am Boden des Führungsschuhs abstützt. Die Rückführfeder wird im Bereich der seitlich auskragenden Fortsätze der Spannklaue nicht eingeklemmt. Dies dient auch einer guten und leichten Verschiebbarkeit der Spannklaue im Führungsschuh.

Die Erfindung wird anhand verschiedener Ausführungsformen weiter beschrieben und erläutert. Es zeigen:

Figur 1       eine Seitenansicht der Spannvorrichtung in einer ersten Ausführungsform, teilweise geschnitten,

Figur 2       eine Ansicht der Spannvorrichtung gemäß Figur 1 von vorn,

Figur 3       eine perspektivische Darstellung der Spannvorrichtung in einer zweiten Ausführungsform,

Figur 4       eine perspektivische Darstellung der Spannvorrichtung gemäß Figur 3 mit einer Spannklaue abweichender Formgestaltung,

Figur 5       eine Schnittdarstellung wesentlicher Teile der Spannvorrichtung gemäß Figur 3 in verschiedenen Spannzuständen,

Figur 6       eine Draufsicht auf die Spannvorrichtung gemäß Figur 3, teilweise geschnitten,

Figur 7       eine Seitenansicht einer dritten Ausführungsform der Spannvorrichtung,

Figur 8       eine vorderansicht der Spannvorrichtung gemäß Figur 7,

Figur 9       eine Seitenansicht der Rückführfeder der Spannvorrichtung und

Figur 10      eine Draufsicht auf die Rückführfeder gemäß Figur 9.

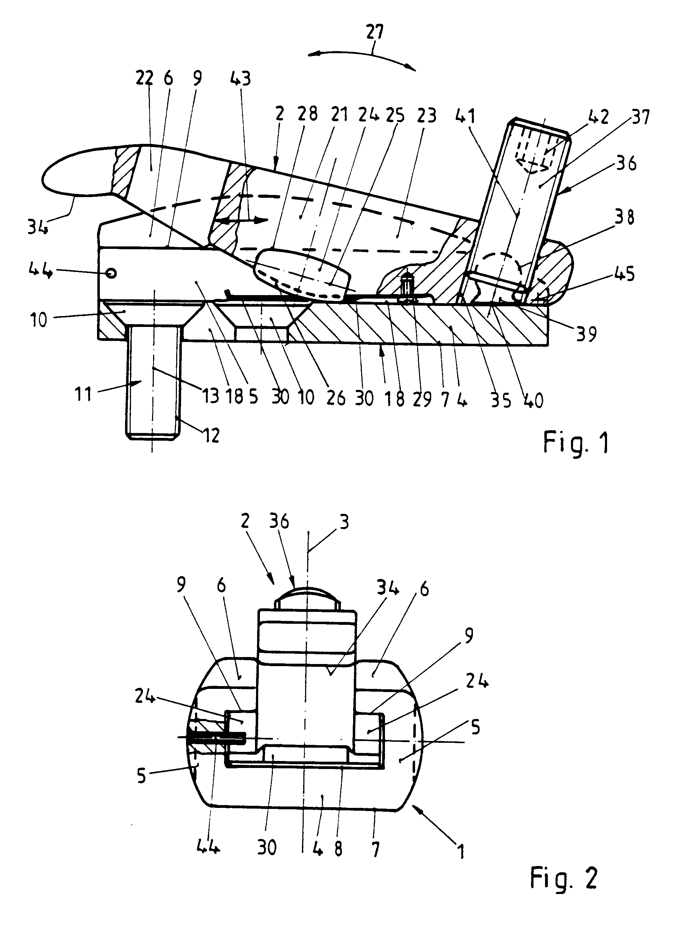

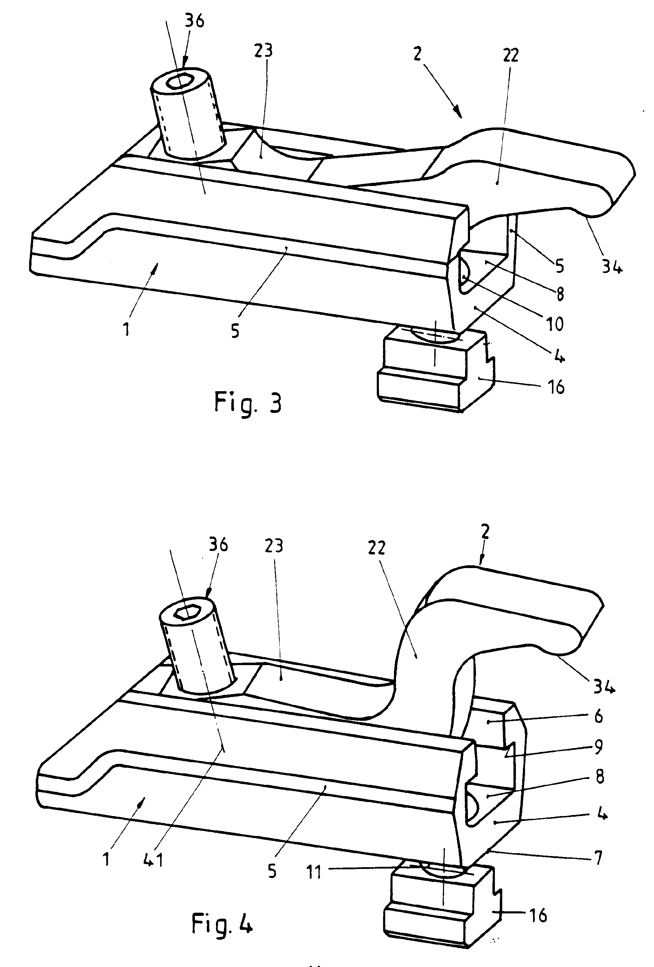

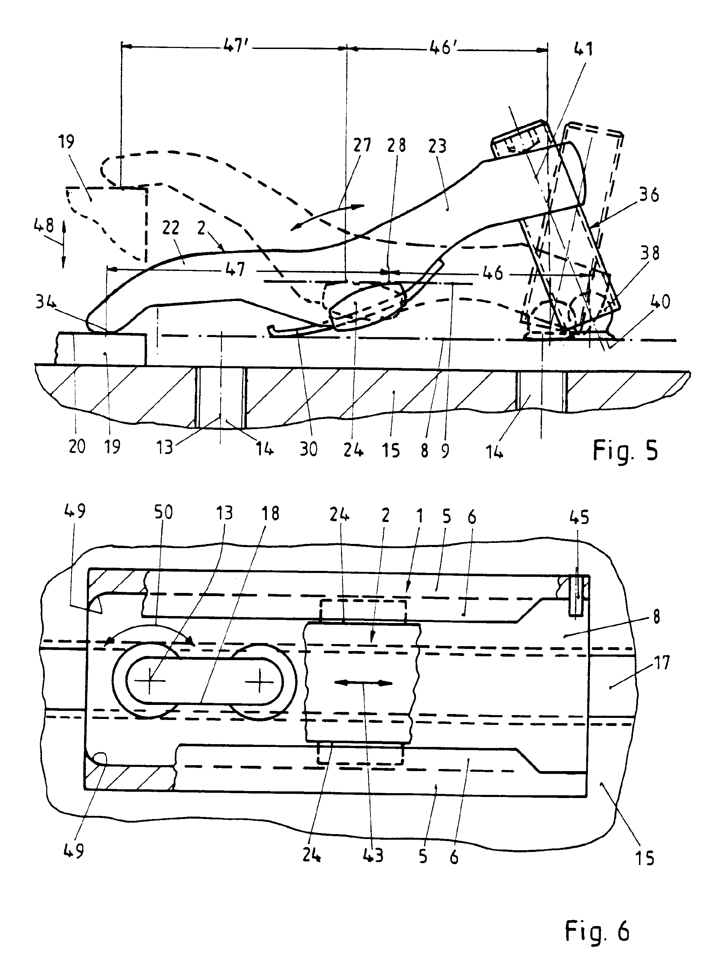

Die in Figur 1 dargestellte Spannvorrichtung weist als wesentliche Bestandteile einen Führungsschuh 1 und eine Spannklaue 2 auf, die beide im wesentlichen symmetrisch zu einer Längsmittelebene 3 (Figur 2) ausgebildet sind. Der Führungsschuh 1 besitzt eine im Querschnitt (Figur 2) etwa T-nutenförmige Gestaltung und weist im einzelnen einen Steg 4 und zwei sich anschließende Seitenwände 5 auf, die in nach innen vorstehenden Wangen 6 enden, so daß insoweit die T-nutenförmige Querschnittsgestaltung umschlossen wird. Der Steg 4 besitzt eine untere Fläche 7, mit der der Führungsschuh 1 und damit die Spannvorrichtung auf dem Spanntisch aufgelagert wird. Im Innern des Führungsschuhs 1 bildet der Steg 4 einen Boden 8. Die Wangen 6 bilden unten innen am Führungsschuh 1 Abstützflächen 9. Der Führungsschuh 1 weist im vorderen Bereich zwei Durchbrechungen 10 auf, die die Formgebung des Kopfs einer Befestigungsschraube 11 besitzen, die mit einem Gewinde 12 ausgestattet ist. Der Kopf der Befestigungsschraube 11 ist hier als Senkkopf ausgebildet und die Durchbrechungen 10 sind so gestaltet, daß die Befestigungsschraube 11 versenkt im Boden 8 des Stegs 4 des Führungsschuhs 1 zum Einsatz gelangt. Durch die Befestigungsschraube 11 wird eine Hochachse 13 festgelegt, die gleichzeitig die Schraubenachse darstellt und um die der Führungsschuh 1 stufenlos drehbar ist, wenn die Befestigungsschraube 11 nicht ganz festgezogen ist. Die Befestigungsschraube 11 kann in ein Gewindeloch 14 (Figur 5), welches in einem vorgegebenen Rastermaß feldmäßig verteilt in einem Spanntisch 15 vorgesehen ist, eingeschraubt werden. Es ist aber auch möglich, der Befestigungsschraube 11 einen Nutenstein 16 (Figuren 3 und 4) zuzuordnen, der in Nuten 17 (Figur 6) eines Spanntischs 15 einführbar ist. Damit wird bereits ein wesentlicher Vorteil der neuen Spannvorrichtung erkennbar: der Führungsschuh 1 und damit die gesamte Spannvorrichtung ist um die Hochachse 13 auf dem Spanntisch 15 stufenlos drehbar, so daß in der Horizontalebene über dem Spanntisch 15 jede beliebige Relativausrichtung zwischen Werkstück und Spannvorrichtung möglich ist. Es ist also jeder Punkt im Raum spannbar. Die beiden Durchbrechungen 10 sind

EP 0 391 346 B1

über ein Langloch 18 (Figur 1) miteinander verbunden, welches in seinem Durchmesser an den Außendurchmesser des Schafts der Befestigungsschraube 11 angepaßt ist. Damit ist sichergestellt, daß die Befestigungsschraube 11 nur an zwei definierten Stellen zu Befestigungszwecken eingesetzt werden kann, so daß der Führungsschuh 1 auf dem Spanntisch 15 in diesen beiden Stufen oder Relativlagen festgesetzt werden kann. Es ist natürlich auch möglich, beispielsweise drei Durchbrechungen 10 in dieser Weise anzuordnen. Die Durchbrechungen 10 sind aber auf jeden Fall im vorderen Bereich, etwa in der vorderen Hälfte der Länge des Führungsschuhs, angeordnet, um eine gute kraftmäßige Abstützung der Spanneinrichtung auf dem Spanntisch 15 beim Festspannen eines Werkstücks zu erzielen. Das Werkstück 19 (Figur 5) befindet sich in der Regel mit seiner zu spannenden Flächen 20 vor dem Führungsschuh 1, so daß die Spannklaue 2 mehr oder weniger nach vorn oder hinten im Führungsschuh 1 verschoben werden muß, um die gewünschte Spannposition zu erreichen.

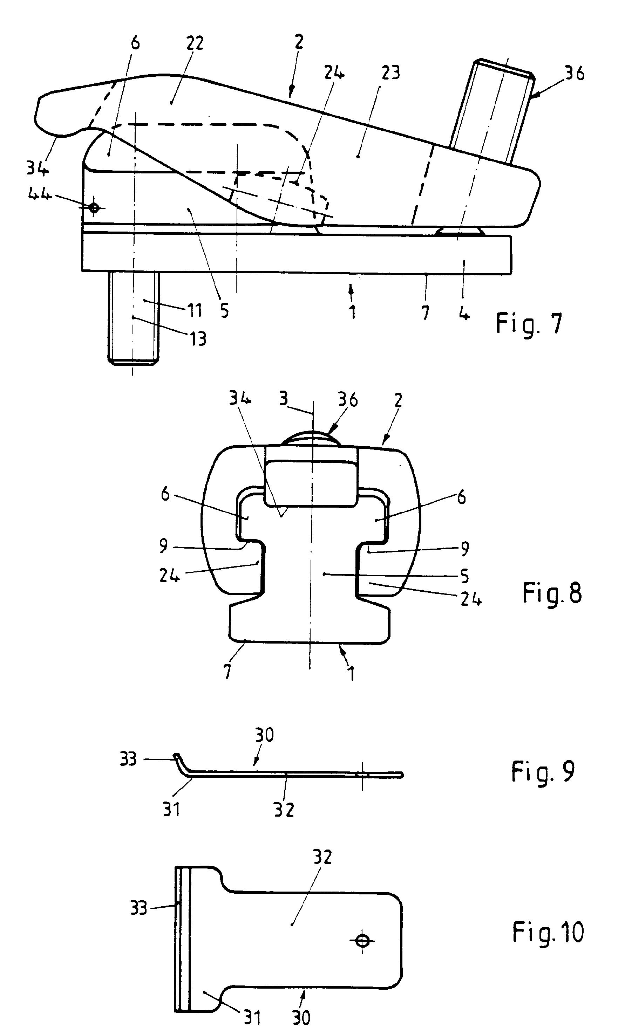

Die Spannklaue 2 ist nach Art eines Kipphebels 21 ausgebildet, der einstückig nach vorn einen Klemmschenkel 22 und nach hinten in einen Spannschenkel 23 übergeht. Etwa im Mittelbereich weist der Kipphebel 21 bzw. die Spannklaue 2 seitlich auskragende Fortsätze 24 symmetrisch zur Längsmittelebene 2 auf, die eine etwa ovale oder elliptische, langgestreckte Formgebung (Figur 1) besitzen, wobei die große Achse 25 etwa parallel zur Längserstreckung des Kipphebels 21 angeordnet ist. Die Fortsätze 24 sind gleichsam am unteren Rand des Kipphebels 21 angeordnet und stehen nach unten noch etwas über, wobei zwischen den Fortsätzen eine Vertiefung 26 gebildet ist. Die Fortsätze 24 liegen je nach Schwenkwinkel 27 (Figur 5) längs zwei Auflagepunkten bzw. Auflagelinien 28 an den Abstützflächen 9 der Wangen 6 des Führungsschuhs 1 an und stützen sich dort ab. Am Boden 8 des Führungsschuhs 1 stützen sich die Fortsätze 24 in der Regel nicht ab. Zu diesem Zweck ist mittels einer Schraube 29 eine Rückführfeder 30 an der Unterseite der Spannklaue 2 so befestigt, daß das freie Ende 31 der Rückführfeder 30 nach vorn auskragt und sich am Boden 8 des Führungsschuhs 1 abstützt, wobei die Rückführfeder 30 als Blattfeder (Figuren 9 und 10) ausgebildet sein kann und im vorderen Bereich verbreitert ist, an den sich nach hinten ein Steg 32 anschließt, der weniger breit ausgebildet ist und durch die Vertiefung 26 zwischen den Fortsätzen 24 frei beweglich hindurchreicht. Die Rückführfeder 30 kann an ihrem vorderen Ende 31 in eine Aufbiegung 33 übergehen, so daß die Rückführfeder 30 das freie Verschieben der Spannklaue 2 im Führungsschuh 1 nicht behindert. Das freie Ende 31 der Rückführfeder 30 ist auch breiter ausgebildet als der größte Durchmesser der Durchbrechungen 10 im Steg 4 des Führungsschuhs 1, so daß sich die Rückführfeder 30 beim Verschieben der Spannklaue 2 nicht in den Durchbrechungen 10 verhaken kann. Die Rückführfeder 30 ist so angeordnet, daß von hier ein Drehmoment im Rechtsdrehsinn (Figur 1) über den Schwenkwinkel 27 ausgeübt wird, so daß der Spannschenkel 23 dem Boden 8 des Führungsschuhs 1 zugekehrt belastet wird.

Das vordere Ende der Spannklaue 2 bzw. des Klemmschenkels 22 geht in eine zweckmäßig ballig ausgebildete Klemmbacke 34 über, die mit der Fläche 20 des Werkstücks 19 in Berührung kommt und über die die Spannkraft auf das Werkstück 19 übertragen wird. Im hinteren Bereich der Spannklaue 2 besitzt der Spannschenkel 23 eine mit Gewinde 35 versehene Durchbrechung, die von einer Spannschraube 36 durchgesetzt wird, die im einzelnen aus einem Gewindebolzen 37 und einer an dessen unterem Ende befestigten Abstützkugel 38 besteht. Die Abstützkugel 38 besitzt in radialer Richtung einen Fortsatz 39, der in eine ebene Abstützfläche 40 übergeht, die sich auf dem Boden 8 des Führungsschuhs 1 flächig abstützt bzw. auflegt. Entsprechend dem sich ändernden Schwenkwinkel 37 verlagert sich auch die Achse 41 der Spannschraube 36, wobei sich die Abstützkugel 38 in ihrer Aufnahme am vorderen Ende des Gewindebolzens 37 so verdreht, daß die Abstützfläche 40 immer parallel und in Anlage zum Boden 8 des Führungsschuhs 1 geführt wird. Die Abstützfläche 40 kann einen größeren Außendurchmesser als der Außendurchmesser der Abstützkugel 38 aufweisen, so daß die hier ausgeübte Spannkraft über eine vergleichsweise große Fläche mit niedriger Flächenpressung übertragbar ist. Der Gewindebolzen 37 bzw. die Spannschraube 36 weist eine Einsenkung 42 oder eine entsprechende andere Formgebung für den Ansatz eines Verdrehwerkzeugs, hier eines Innensechskantschraubendrehers, auf.

Wie ersichtlich, kann die Spannklaue 2 im Führungsschuh 1 in der gelösten Stellung in der Längsrichtung, die durch die Längsmittelebene 3 festgelegt wird, gemäß Pfeil 43 verschoben werden, so daß das vordere Ende der Spannklaue 2 mit der Klemmbacke 34 mehr oder weniger weit über das vordere Ende des Führungsschuhs 1 übersteht und damit auf eine zu spannende Fläche 20 eines Werkstücks 10 abgesenkt werden kann, indem die Spannschraube 36 angezogen wird. Das Lösen bzw. Freigeben des Werkstücks 19 geschieht in umgekehrter Drehrichtung der Spannschraube 36. Die freie Verschiebbarkeit der Spannklaue 2 im Führungsschuh 1 kann durch Anschläge begrenzt werden. Zu diesem Zweck ist gemäß der Ausführungsform der Figuren 1 und 2 ein Spannstift 44 in eine entsprechende Bohrung in der einen Seitenwand 5 des Führungsschuhs 1 so eingeschlagen, daß sie nach innen auskragend übersteht, so daß der entsprechende Fortsatz 24 beim Vorschieben der Spannklaue 2 hier zur Anlage kommt. Auch am hinteren Ende des Führungsschuhs kann ein solcher Anschlag vorgesehen sein. Hier ist jedoch zweckmäßig ein Gewindestift oder ein Bolzen 45 (Figur 6) dicht über dem Boden 8 des Führungsschuhs 1 vorgesehen, so daß auch hier die normale Verschiebbarkeit der Spannklaue 2 im Führungsschuh nach hinten begrenzt wird. Die Spannklaue 2 kann weder nach vorn noch nach hinten aus dem Führungsschuh herausfallen. Infolge der höheren Anordnung des Spannstifts 44 ist eine Entnahme nach vorn nicht möglich (und in der Regel auch nicht erforderlich). Die Anordnung des Bolzens 45 und seine Gestaltung in Abstimmung auf die kleine Achse der Fortsätze 24 bzw. die Höhe der Entfernung zwischen der Abstützfläche 9 und dem Boden 8 ist so bemessen, daß die Spannklaue 2 unter Zusammendrückung der Rückführfeder 40 und bei Einnahme eines entsprechenden Verschwenkwinkels 27 durch den Zwischenraum zwischen Bolzen 45 und Abstützfläche 9 herausgenommen werden kann, beispielsweise zu dem Zweck, eine anders gebogen gestaltete Spannklaue (Figuren 3 und 4) in den identischen Führungsschuh 1 einzusetzen bzw. solche Spannklauen auszutauschen, um unterschiedliche Höhenbereiche von Werkstücken 19 überdecken zu können.

Die Darstellungen der Ausführungsbeispiele gemäß den Figuren 3 und 4 zeigen Spannvorrichtung mit identischem Führungsschuh 1 und unterschiedlich gebogenen, eingesetzten Spannklauen 2. Die Spannklaue 2 gemäß Figur 3 ist zum Spannen von Werkstücken 19 in einem Höhenbereich zwischen 3 und 40 mm vorgesehen und ausgebildet, während die Ausführungsform gemäß Figur 4 für einen Höhenbereich von 20 bis 50 mm ausgebildet sein kann. Die beiden Figuren 3 und 4 verdeutlichen gleichzeitig, daß mehrere Spannklauen 2 einem Führungsschuh 1 zugeordnet sein können, so daß eine Austauschbarkeit gegeben ist, wenn Werkstück stark differierender Höhen nacheinander gespannt werden sollen. Aus den Figuren 3 und 4 sowie auch aus Figur 1 ist deutlich erkennbar, daß die jeweiligen Spannklauen 2 eine gebogene, geschwungene Form aufweisen. Die Endbereiche des Klemmschenkels 22 und des Spannschenkels 23 lassen sich durch eine gedachte Linie miteinander verbinden. Die Formgebung ist dann immer so, daß die seitlich auskragenden Fortsätze 24 unterhalb dieser Linie liegen. Hierdurch wird der Schwenkwinkel 27 vergrößert und der Spannbereich der jeweiligen Spannklaue 2 ausgedehnt.

Der Sinn der besonderen Gestaltung der Fortsätze 24 soll anhand von Figur 5 verdeutlicht werden. Es ist hier zunächst ein Spanntisch 15 angedeutet, auf dem ein Werkstück 19 relativ niedriger Höhe gespannt werden soll. In durchgezogener Linienführung ist die Relativlage der Spannklaue 2 dargestellt, wobei in strichpunktierter Linienführung Kanten des Führungsschuhs 1 angedeutet sind. Man erkennt, daß die Spannklaue 2 gemäß Schwenkwinkel 27 so verschwenkt ist, daß die Klemmbacke 34 auf der Fläche 20 des Werkstücks aufgesetzt hat und sich damit auf einem niedrigeren Niveau befindet als das hintere Ende des Spannschenkels 23. Figur 5 möge die gespannte Stellung darstellen, also nach dem Anziehen der Spannschraube 36. Es ist erkennbar, daß die Auflagelinie 28, die in Anlage an der Abstützfläche 9 des Führungsschuhs 1 ist, sich relativ weit hinten an den Fortsätzen 24 des Spannhebels 2 befindet. Da die Spannkraft auf das Werkstück in senkrechter Richtung übertragen wird und auch die Abstützung im Bereich der Abstützfläche 40 senkrecht erfolgt, muß für die Hebelarme die Projektion in senkrechter Richtung der Abstände beachtet werden. Es ergibt sich hier eine wirksame Spannschenkellänge 46 und eine wirksame Klemmschenkellänge 47. Da sich die Achse 41 der Spannschraube 36 schräg nach hinten erstreckt, wird durch diese Spannposition zwar die Spannschenkellänge 46 vergleichsweise vergrößert. Gleichzeitig wandert aber auch die Auflagelinie 28 nach hinten, so daß der Abstandszuwachs auf die Spannschenkellänge 46 und die Klemmschenkellänge 47 aufgeteilt wird, so daß das Verhältnis der beiden Schenkellängen unabhängig vom jeweiligen Verschwenkwinkel 27 angenähert konstant gehalten ist. Durch die Formgebung der Fortsätze 24 kann auf das Wandern der Auflagelinie 28 Einfluß genommen werden. Diese in durchgezogener Linienführung dargestellte Spannlage ist zu vergleichen mit der in gestrichelter Linienführung dargestellten Spannlage für ein wesentlich höheres Werkstück 19. In dieser Klemmposition ist die Spannklaue 2 im Rechtsschwenksinn gemäß Verschwenkwinkel 27 entsprechend verschwenkt, wobei die Abstützfläche 40 in der vertikalen Projektion näher an die Klemmbacke 34 heranrückt. Somit ergeben sich eine veränderte Spannschenkellänge 46' und eine veränderte Klemmschenkellänge 47'. Man erkennt, daß die Auflagelinie 28 an den Fortsätzen 24 vergleichsweise nach vorn gewandert ist. Das Verhältnis der Schenkellängen 46 zu 47 entspricht etwa dem von 46' zu 47'. Entsprechendes gilt für sämtliche Zwischenlagen über den Verschwenkwinkel 27. Damit ist aufgezeigt, daß unabhängig von dem spannbaren Höhenbereich gemäß Doppelpfeil 48 bei vergleichbarem Anziehen der Spannschraube 36 auch vergleichbare Spannkräfte von der Spannbacke 34 übertragen werden.

Figur 6 verdeutlicht noch einmal die Verhältnisse in Form einer Draufsicht auf einen Spanntisch 15, der mit Nuten 17 ausgestattet ist, so daß hier ein Nutenstein 16 gemäß den Figuren 3 und 4 Anwendung findet, der jedoch nicht dargestellt ist. Es ist im wesentlichen der Führungsschuh 1 gezeigt, der im vorderen Bereich aufgebrochen dargestellt ist. Hier sind auch Verengungen 49 erkennbar, die als Anschlag für die Fortsätze 24 wirken und den Spannstift 44 (Figur 1) ersetzen. Diese in der Formgestaltung rund begrenzten Verengungen 49 ergeben sich beim Fräsen der T-Nut am Führungsschuh, indem der Vorschub des Fräsers von hinten nach vorn angehalten und die Vorschubrichtung dann wieder umgekehrt wird. Es ist gleichzeitig erkennbar, daß der besonders beanspruchte Querschnitt der Seitenwandungen 5 des Führungsschuhs 1 hier in diesem Bereich nicht geschwächt, sondern im Gegenteil verstärkt wird.

Die Befestigungsschraube, die hier nicht dargestellt ist, möge entsprechend der Hochachse 13 eingesetzt sein. Der Führungsschuh 1 ist hier in Parallelausrichtung zu der Nut 17 dargestellt. Es ist jedoch erkennbar, daß durch die Verwendung nur einer einzigen Befestigungsschraube der Führungsschuh 1 relativ zu der Lage der Nut 17 am Spanntisch 12 um die Hochachse 13 stufenlos gedreht und in jeder Stellung festgeschraubt werden kann. Dies ist durch den Doppelpfeil 50 verdeutlicht. Damit wird gleichzeitig erkennbar, daß in dem Bündel der Ebenen oberhalb der Auflagefläche des Spanntischs 15 jeder beliebige Punkt im Raum erreichbar und damit spannbar ist. Die radiale Richtung bzw. Entfernung wird dann durch Verschieben der Spannklaue 2 gemäß Pfeil 43 herbeigeführt. Die spannbaren Höhenbereiche gemäß Doppelpfeil 48 (Figur 5) ergeben sich durch die besondere Formgestaltung jeder einzelnen Spannklaue 2, die Verwendung findet und eingesetzt wird. Damit ist überschaubar, daß in einem Raum oberhalb der Fläche des Spanntischs 15 gleichsam jeder Punkt gespannt werden kann. Es kann also jede beliebige Relativlage zwischen Spannvorrichtung und Werkstück 19 genutzt werden. Freilich ist dieser Raum nicht unbegrenzt, sondern von den übrigen geometrischen Abmessungen des Führungsschuhs 1 und der Spannklaue 2 abhängig.

Im hinteren Bereich des Führungsschuhs 1 enden die Wangen 6 in einigem Abstand und es erstreckt sich eine schrägliegende Abschlußfläche bis zum Boden 8 des Führungsschuhs 1. In diesem Bereich ist auch der Bolzen 45 angeordnet, so daß vorstellbar ist, daß der Bolzen 45 zwar normalerweise einen Anschlag gegen das Verschieben der Spannklaue 2 im Führungsschuh 1 nach hinten bildet, jedoch andererseits gezielt die Fortsätze 24 und damit die Spannklaue 22 aus der so gebildeten Öffnung hinten am Führungsschuh im Bereich des Bolzens 45 herausgenommen werden kann.

Die Figuren 7 und und 8 zeigen ein weiteres Ausführungsbeispiel der Spannvorrichtung, welches gleichsam die Umkehrung zu den bisher gezeigten Ausführungsbeispielen insofern darstellt, als die beiden Seitenwände 5 hier in eine Mittelwand 5 am Führungsschuh 1 zusammengefaßt sind, von der Wangen 6 symmetrisch zur Längsmittelebene 3 auskragend vorgesehen sind. Entsprechend besitzt die Spannklaue 2 eine mittig und symmetrisch ausgebildete Ausnehmung und greift mit sich nach innen erstreckenden Fortsätzen 24 über den Führungsschuh 1 hinweg (Figur 8). Die übrige Ausbildung ist entsprechend. Es ergeben sich entsprechende Verhältnisse. Eine Rückführfeder ist auch hier vorhanden, jedoch der Übersichtlichkeit halber nicht dargestellt.

Die Figuren 9 und 10 verdeutlichen noch einmal die Ausbildung und Formgebung der Rückführfeder 30 mit ihrem Steg 32 und dem verbreiterten freien Ende 31. Auch eine Durchbrechung ist angedeutet, die von der Schraube 29 beim Festschrauben an der Spannklaue 2 durchsetzt wird. Es versteht sich, daß die Rückführfeder 30 an der Spannklaue 2 so eingebaut wird, daß die Aufbiegung 33 nach oben, also dem Boden 8 abgekehrt, zu liegen kommt.

Mit Bezug zu Figur 5 wird noch klargestellt, daß der im Anspruch 1 benutzte Mittelbereich, in welchem die nach außen kragenden Fortsätze angeordnet sind, unter Veränderung des Übersetzungsverhältnisses nach vorn oder hinten verschoben werden kann. Da die übertragbaren Spannkräfte ohnehin sehr groß sind, kann eine Verschiebung der Fortsätze bzw. des Mittelbereichs nach hinten, also auf die Spannschraube zu, dazu genutzt werden, um die Spannkräfte entsprechend dem dann gegebenen Hebelverhältnis zu verringern, jedoch andererseits den Höhenbereich, in welchem gespannt werden kann, vorteilhaft zu vergrößern. Eine Verlagerung der Anordnung der Fortsätze nach vorn hingegen erbringt eine größere Übersetzunt für die auf das Spanngut einwirkenden Spannkräfte. Hebelübersetzungen von 3:1 oder 1:3 sind ebenfalls durchaus noch denkbar und im Einzelfall vorteilhaft.

B e z u g s z e i c h e n l i s t e :

| | | | |
|---|---|---|---|
| 1 | = Führungsschuh | 33 = Aufbiegung |
| 2 | = Spannklaue | 34 = Klemmbacke |
| 3 | = Längsmittelebene | 35 = Gewinde |
| 4 | = Steg | 36 = Spannschraube |
| 5 | = Seitenwand | 37 = Gewindebolzen |
| 6 | = Wange | 38 = Abstützkugel |
| 7 | = Fläche | 39 = Fortsatz |
| 8 | = Boden | 40 = Abstützfläche |
| 9 | = Abstützfläche | 41 = Achse |
| 10 | = Durchbrechung | 42 = Einsenkung |
| 11 | = Befestigungsschraube | 43 = Pfeil |
| 12 | = Gewinde | 44 = Spannstift |
| 13 | = Hochachse | 45 = Bolzen |
| 14 | = Gewindeloch | 46 = Spannschenkellänge |
| 15 | = Spanntisch | 47 = Klemmschenkellänge |
| 16 | = Nutenstein | 48 = Doppelpfeil |
| 17 | = Nut | 49 = Verengung |
| 18 | = Langloch | 50 = Doppelpfeil |
| 19 | = Werkstück | |
| 20 | = Fläche | |
| 21 | = Kipphebel | |
| 22 | = Klemmschenkel | |
| 23 | = Spannschenkel | |
| 24 | = Fortsatz | |
| 25 | = Achse | |
| 26 | = Vertiefung | |
| 27 | = Schwenkwinkel | |
| 28 | = Auflagelinie | |
| 29 | = Schraube | |
| 30 | = Rückführfeder | |
| 31 | = Ende | |
| 32 | = Steg | |

**Patentansprüche**

1. Spannvorrichtung zum Festspannen eines Werkstücks auf einem Spanntisch, mit einem auf dem Spanntisch (15) befestigbaren Führungsschuh (1), der in symmetrischer Anordnung Ausnehmungen (8, 9) aufweist, mit einer Spannklaue (2), die als Kipphebel (21) ausgebildet ist, einen Spannschenkel (23) und einen Klemmschenkel (22) aufweist, und mit im Mittelbereich angeordneten und seitlich auskragenden Fortsätzen (24) in die Ausnehmungen (8, 9) des Führungsschuhs (1) eingreift und sich beim Spannen dort abstützt, und mit einer den Spannschenkel (23) im Bereich seines freien Endes durchsetzenden Spannschraube (36), die sich beim Spannen auf dem Führungsschuh (1) abstützt, dadurch gekennzeichnet, daß die Ausnehmungen (8, 9) über die Länge des Führungsschuhs (1) durchgehend vorgesehen sind und Bestandteil einer T-nutenförmigen Querschnittsgestaltung des Führungsschuhs (1) sind, daß die Spannklaue (2) eine geschwungene Gestalt aufweist, bei der die freien Enden des Klemmschenkels (22) und des Spannschenkels (23) höher angeordnet sind als die Fortsätze (24), daß die Fortsätze (24) einen etwa elliptischen Querschnitt mit Ausrichtung der großen Achse (25) etwa in Längsrichtung der Spannklaue (2) aufweisen, daß die Spannklaue (2) eine entgegen der Spannrichtung wirkende und sich am Führungsschuh (1) abstützende Rückführfeder (30) aufweist, und daß für die Befestigung des Führungsschuhs (1) am Spanntisch (15) nur eine Befestigungsschraube (11) vorgesehen ist, der eine oder mehrere im vorderen Bereich des Führungsschuhs (1) angeordnete Durchbrechungen (10) zugeordnet sind.

2. Spannvorrichtung nach Anspruch 1, dadurch gekennzeichnet, daß die Spannschraube (36) einen in einem Gewinde (35) im Spannschenkel (23) geführten Gewindebolzen (37) aufweist, an dessen dem Führungsschuh (1) zugekehrten Ende eine Abstützkugel (38) angeordnet ist, die an einem radial über den Umriß der Kugel auskragenden Fortsatz (39) eine ebene Abstützfläche (40) aufweist.

3. Spannvorrichtung nach Anspruch 1, dadurch gekennzeichnet, daß die T-nutenförmige Querschnittsgestaltung der Ausnehmungen (8, 9) am vorderen Ende des Führungsschuhs (1) in zwei Verengungen (49) übergeht.

4. Spannvorrichtung nach Anspruch 1, dadurch gekennzeichnet, daß die Spannklauen (2) mit unterschiedlich stark geschwungener Gestalt vorgesehen sind, die einem einzigen Führungsschuh (1) zugeordnet sind, um unterschiedliche Höhenbereiche abzudecken.

5. Spannvorrichtung nach Anspruch 1, dadurch gekennzeichnet, dßa am hinteren Ende der T-nutenförmigen Ausnehmungen (8, 9) des Führungsschuhs (1) eine Schraube oder ein Stift (45) vorgesehen ist, die niedrig über dem Boden (8) der Ausnehmungen (8, 9) angeordnet sind.

6. Spannvorrichtung nach Anspruch 1 oder 5, dadurch gekennzeichnet, daß die Rückführfeder (30) in Form einer Blattfeder vorgesehen und unter dem Spannschenkel (23) an die Spannklaue (2) angeschraubt ist, und daß sich die Blattfeder in den Bereich des Klemmschenkels (22) nach vorn frei auskragend erstreckt.

7. Spannvorrichtung nach Anspruch 6, dadurch gekennzeichnet, daß die Blattfeder T-förmigen Umriß aufweist.

8. Spannvorrichtung nach anspruch 1, dadurch gekennzeichnet, daß im vorderen Bereich des Führungsschuhs (1) mehrere Durchbrechungen 810) angeordnet sind, die durch einen Schlitz (18) verringerter Breite untereinander verbunden sind.

9. Spannvorrichtung nach Anspruch 2, dadurch gekennzeichnet, daß der Fortsatz (39) der Abstützkugel (38) der Spannschraube (36) mit sich in radialer Richtung im Durchmesser vergrößerndem Querschnitt vorgesehen ist.

10. Spannvorrichtung nach Anspruch 1, dadurch gekennzeichnet, daß zwischen den Fortsätzen (24) der Spannklaue (2) eine Vertiefung (26) vorgesehen ist, durch die sich die Rückführfeder (30) hindurch erstreckt.

**Claims**

1. Chucking fixture for securing a workpiece on a chucking table, having a guide shoe (1) which can be fastened on the chucking table (15) and has recesses (8, 9) in symmetrical arrangement, having a chucking claw (2) which is designed as a rocking lever (21) and has a chucking leg (23) and a clamping leg (22), and engages by continuations (24), arranged in the central region and protruding laterally, into the recesses (8, 9) of the guide shoe (1) and is supported there during chucking, and having a chucking screw (36) which passes through the chucking leg (23) in the region of its free end and is supported on the guide shoe (1) during chucking, characterised in that the recesses (8, 9) are provided continuously over the length of the guide shoe (1) and are a constituent part of a T-slot-shaped cross-sectional configuration of the guide shoe (1), in that the chucking claw (2) has a curved shape, in which the free ends of the clamping leg (22) and of the chucking leg (23) are arranged higher than the continuations (24), in that the continuations (24) have an approximately elliptical cross-section with the major axis (25) aligned approximately in the longitudinal direction of the chucking claw (2), in that the chucking claw (2) has a return spring (30) acting against the chucking direction and supported on the guide shoe (1), and in that for the fastening of the guide shoe (1) on the chucking table (15) there is provided only one fastening screw (11), to which one or more clearances (10) arranged in the front region of the guide shoe (1) are assigned.

2. Chucking fixture according to Claim 1, characterised in that the chucking screw (36) has a threaded bolt (37) which is guided in a thread (35) in the chucking leg (23) and on the end of which, facing the guide shoe (1), there is arranged a supporting ball (38), which has a planar supporting surface (40) on a continuation (39) protruding radially beyond the outline of the ball.

3. Chucking fixture according to Claim 1, characterised in that the T-slot-shaped cross-sectional configuration of the recesses (8, 9) at the front end of the guide shoe (1) merges into two constrictions (49).

4. Chucking fixture according to Claim 1, characterised in that the chucking claws (2) are provided with a shape curved to differing degrees, which claws are assigned to a single guide shoe (1) in order to cover different ranges of height.

5. Chucking fixture according to Claim 1, characterised in that at the rear end of the T-slot-shaped recesses (8, 9) of the guide shoe (1) there is provided a screw or a pin (45), which is arranged low over the bottom (8) of the recesses (8, 9).

6. Chucking fixture according to Claim 1 or or 5, characterised in that the return spring (30) is provided in the form of a leaf spring and is screwed under the chucking leg (23) onto the chucking claw (2), and in that the leaf spring extends, freely protruding forwards, into the region of the clamping leg (22).

7. Chucking fixture according to Claim 6, characterised in that the leaf spring has a T-shaped outline.

8. Chucking fixture according to Claim 1, characterised in that in the front region of the guide shoe (1) there is arranged a plurality of clearances (10), which are connected to one another by a slit (18) of reduced width.

9. Chucking fixture according to Claim 2, characterised in that the continuation (39) of the supporting ball (38) of the chucking screw (36) is provided with a cross-section which enlarges in diameter in the radial direction.

10. Chucking fixture according to Claim 1, characterised in that between the continuations (24) of the chucking claw (2) there is provided a depression (26), through which the return spring (30) extends.

## Revendications

1. Dispositif de serrage pour fixer une pièce à usiner sur une table de montage avec un patin de guidage (1) se fixant sur la table de montage (15), ce patin présentant des évidements (8, 9) disposés symétriquement, avec un mors de serrage (2) sous la forme d'un levier basculant (21), présentant une branche de montage (23) et une branche de serrage (22), et des appendices (24) disposés dans la région médiane et dépassant latéralement, s'engageant dans les évidements (8, 9) du patin de guidage (1) et s'y appuyant lors du serrage, et avec une vis de serrage (36) traversant la branche de montage (23) dans la région de son extrémité libre, cette vis s'appuyant sur le patin de guidage (1) lors du serrage,
**caractérisé** en ce que les évidements (8, 9) sont prévus continus sur la longueur du patin de guidage (1) et sont des éléments constitutifs d'une conformation du patin de guidage (1) avec une section transversale avec des rainures en forme de T, en ce que le mors de serrage (2) présente une conformation arquée, dans laquelle les extrémités libres de la branche de serrage (22) et de la branche de montage (23) sont disposées plus haut que les appendices (24), en ce que les appendices (24) présentent une section sensiblement en ellipse dont le grand axe (25) est orienté sensiblement dans le sens longitudinal du mors de serrage (2), en ce que le mors de serrage (2) présente un ressort de rappel (30) agissant en sens contraire au sens de serrage et prenant appui sur le patin de guidage (1), et en ce qu'il est prévu pour la fixation du patin de guidage (1) sur la table de montage (15) seulement une vis de fixation (11) à laquelle sont associées une ou plusieurs ouvertures (10) disposées dans la région antérieure du patin de guidage (1).

2. Dispositif de serrage selon la revendication 1, caractérisé en ce que la vis de serrage (36) présente un goujon fileté (37) guidé dans un filetage (35) dans la branche de montage (23), une rotule d'appui (38) étant disposée sur l'extrémité de ce goujon tournée vers le patin de guidage (1), cette rotule présentant une surface plane d'appui (40) sur un appendice (39) dépassant radialement sur le pourtour de la rotule.

3. Dispositif de serrage selon la revendication 1, caractérisé en ce que la conformation transversale avec des rainures en forme de T des évidements (8, 9) se termine sur l'extrémité du patin de guidage (1) par deux rétrécissements (49).

4. Dispositif de serrage selon la revendication 1, caractérisé en ce que les mors de serrage (2) sont prévus avec une conformation plus ou moins fortement arquée, ces mors étant associés à un seul patin de guidage (1) pour couvrir des gammes de hauteurs différentes.

5. Dispositif de serrage selon la revendication 1, caractérisé en ce qu'il est prévu à l'extrémité postérieure des évidements (8, 9) en forme de rainures en T du patin de guidage (1) une vis ou un goujon (45) qui est disposé à faible hauteur au-dessus du fond (8) des évidements (8, 9).

6. Dispositif de serrage selon la revendication 1 ou 5, caractérisé en ce que le ressort de rappel (30) est prévu sous la forme d'un ressort à lame et est vissé sur le mors de serrage (2) sous la branche de montage (23), et en ce que ce ressort à lame s'étend en dépassant librement vers l'avant dans la zone de la branche de serrage (22).

7. Dispositif de serrage selon la revendication 6, caractérisé en ce que le ressort à lame présente un contour en forme de T.

8. Dispositif de serrage selon la revendication 1, caractérisé en ce que plusieurs ouvertures (10) sont disposées dans la région antérieure du patin de guidage (1), ces ouvertures étant reliées entre elles par une fente (18) de largeur réduite.

9. Dispositif de serrage selon la revendication 2, caractérisé en ce que l'appendice (39) de la rotule d'appui (38) de la vis de serrage (36) est prévu avec une section diamètralement croissante en sens radial.

10. Dispositif de serrage selon la revendication 1, caractérisé en ce qu'il est prévu entre les appendices (24) du mors de serrage (2) un renfoncement (26) à travers lequel s'étend en le traversant le ressort de rappel (30).

Fig. 1

Fig. 2

Fig. 3

Fig. 4

Fig. 5

Fig. 6

Fig. 7

Fig. 8

Fig. 9

Fig. 10

16